# EUROPEAN PATENT SPECIFICATION

(11) **EP 2 278 646 B1**
(45) Date of publication and mention of the grant of the patent: **16.01.2013**
(21) Application number: 09729641.2
(22) Date of filing: 02.04.2009
(51) Int. Cl.: H01M 4/92, C23C 4/06, C23C 4/12

(54) **METHOD FOR THE PRODUCTION OF AN ELECTRODE CATALYST**
VERFAHREN ZUR HERSTELLUNG EINES ELEKTRODENKATALYSATORS
PROCÉDÉ POUR LA FABRICATION D'UN CATALYSEUR D'ÉLECTRODE

(30) Priority: 11.04.2008 JP 2008103841
(43) Date of publication of application: 26.01.2011
(73) Proprietor: Toyota Jidosha Kabushiki Kaisha, Toyota-shi, Aichi-ken 471-8571 (JP)
(72) Inventor: YOSHIDA, Satoshi, Toyota-shi, Aichi-ken, 471-8571 (JP); ISHIMARU, Hirokazu, Toyota-shi, Aichi-ken, 471-8571 (JP)
(74) Representative: Kuhnen & Wacker
(86) International application number: PCT/JP2009/056876
(87) International publication number: WO 2009/125715

(56) References cited:
- WO-A1-2007/088292
- WO-A1-2007/107832
- JP-A- 2006 007 105
- JP-A- 2007 005 136
- JP-A- 2007 179 963
- US-A1- 2007 270 305

## Description

### TECHNICAL FIELD

The present invention relates to a method for the production of an electrode catalyst that forms an electrode catalyst layer of a fuel cell.

### BACKGROUND ART

Today, hybrid vehicles and electric vehicles are drawing attention as vehicles with less environmental loading effects, etc., and development aiming for even smaller sizes and better performance thereof is progressing by the day. In particular, fuel cells mounted on electric vehicles, etc., differ vastly from internal combustion engines in terms of their power generation principles, and are extremely important in-vehicle devices in realizing clean exhaust emission, quiet drive, etc. However, it would not be an overstatement to say such fuel cells are still in their development stage, where improving performance as well as reducing product costs are urgent problems, without which wider acceptance of electric vehicles would be hard to realize.

With respect to fuel cells that use polymer electrolytes that are operative at relatively low temperatures, platinum, which is relatively expensive, is used for the electrode catalyst forming electrode catalyst layers of the positive and negative electrodes. More specifically, an electrode catalyst is produced by, having platinum loaded on the surface of a powder like carrier comprising carbon. A specific method for the production of an electrode catalyst layer is, for example, one wherein the surface of a backing material, such as a Teflon sheet (Teflon: registered trademark of DuPont), etc., is coated with a catalyst ink containing the above-mentioned electrode catalyst, an electrolyte, and a dispersing solvent, and wherein the surface of the catalyst ink is subsequently dried with a hot plate to form in the interior thereof a catalyst layer of a uniform structure (a porous structure of uniform diameter). It is noted that for this coating process, there are methods for coating with a spray, methods that use a doctor blade, etc.

Incidentally, as a measure for obtaining a high-performance electrode catalyst while reducing the amount of platinum used, there is, for example, a method in which platinum is loaded as uniformly as possible on the surface of a powder-like carrier comprising carbon. In order to have platinum loaded uniformly on the surface of the carrier, one would conduct, for example, a sputtering process while effectively stirring the powder. As conventional art for realizing this effective stirring of powder, there is, for example, Patent Document 1.

The technique disclosed in Patent Document 1 is one in which fine particles are contained in a polygonal barrel, and an appropriate thin film is formed on the surface thereof while the fine particles are stirred by rotating the barrel.
Patent Document 1: JP Patent Publication (Kokai) No. 2004-250771 A

### DISCLOSURE OF THE INVENTION

### Problems to be Solved by the Invention

With the device disclosed in Patent Document 1, by arranging the barrel to be polygonal, the fine particles are stirred while colliding with corner portions thereof as the barrel rotates. Consequently, an improvement in stirring performance may be expected as compared to cylindrical barrels. However, since all it does is merely arrange the barrel to be polygonal, the powder, in fact, is not stirred even as the barrel rotates, and numerous powders merely form one or a plurality of large lumps and roll, and sufficient stirring of the powder is far from being achieved.

In addition, the present inventors have found that, among catalyst loading methods, with dry processes as represented by the above-mentioned sputtering, locations where the catalyst is geometrically liable to immobilization with respect to the carbon carrier, etc., tend to become loading sites for the catalyst, whereas with wet processes in which catalyst loading is performed within a solvent, loading locations where a precursor of the load catalyst metal is chemically liable to adsorption become loading sites for immobilization. Since these loading sites or adsorption sites are present only at limited locations on the surface of the carrier, a problem has become apparent whereby when the catalyst loading amount is increased, the loaded catalyst becomes concentrated at certain locations, causing coarsening thereof. This translates directly to a reduction in the effective surface area of the catalyst metal, which would run counter to the goal of obtaining fuel cells with a favorable power generating capacity with as little catalyst metal as possible.

The present invention is made in view of the problems mentioned above, and an object thereof is to provide a method capable of making the effective surface area of a catalyst as large as possible and, further, of producing an electrode catalyst of a high loading density and fine particle size.

### Means for Solving the Problems

In order to achieve the objective above, a method for the production of an electrode catalyst according to the present invention is disclosed in claim 1.

As discussed above, sites at which a catalyst tends to be loaded on a carrier differ between wet processes and dry processes. To explain again, in wet processes, a catalyst material or catalyst material precursor (catalyst material compound) in a solvent attaches to the functional group of a carrier, such as carbon, etc., with which it readily interacts. On the other hand, in dry processes, it tends to attach at sites into which a catalyst metal stably enters geometrically, such as dents, etc., in the surface of a carrier.

As such, a production method of the present invention relates to a production method in which, by using the above-mentioned wet process and dry process in combination, the loading of a catalyst metal on readily attaching loading surfaces that are unique to the respective processes is performed, and dispersed loading of the catalyst metal on the carrier surface is realized.

In a production method of the present invention, by first dispersing and mixing a carrier, such as carbon, etc., and a catalyst material, which comprises platinum or a platinum alloy (platinum-cobalt, etc.), or a catalyst material precursor, such as chloroplatinic acid, hexachloroplatinic acid, etc., in a solvent, such as water, alcohol, etc., a catalyst-dispersed slurry in which the catalyst material (catalyst metal) is loaded at loading surface sites that are readily loaded in a wet process is produced, and by subsequently evaporating, etc., the solvent, a catalyst-loaded carrier intermediate is produced (first step).

Subsequently, through a dry process that does not use a solvent, the catalyst material is loaded at geometrically stable sites on the surface of the carrier, which is an intermediate, and a catalyst-loaded carrier for an electrode catalyst is produced (second step).

Here, for this dry process, such appropriate methods as vacuum deposition, sputtering, ion plating, etc., which are conventional physical vapor deposition methods, may be employed.

According to the above-mentioned method for the production of an electrode catalyst of the present invention, it is possible to disperse and load a catalyst material of a fine size on the surface of a carrier, such as carbon, etc., without causing aggregation, and it is possible to realize high-loading of a catalyst metal (e.g., 30 % or more by weight) on a carrier while increasing the effective surface area of the catalyst metal.

In addition, a preferred embodiment of a method for the production of an electrode catalyst according to the present invention is one in which, with respect to the catalyst-loaded carrier intermediate produced in the above-mentioned first step, the particle size of the catalyst material that is attached to the surface of the carrier is approximately 3 nm (nanometers).

In a production method of the present invention, the cue for switching from the above-mentioned first step to the second step is defined by way of the particle size of the catalyst material in the catalyst-loaded carrier intermediate.

According to tests by the present inventors, it has been demonstrated that when, in the wet process, the particle size (average particle size) of platinum or an alloy thereof loaded on, for example, carbon is approximately 3 nm, the effective surface area of the catalyst metal becomes greatest. However, in the wet process, as the amount of loaded catalyst material is increased, so, too, does the particle size of the catalyst material, which fact leads to a decrease in the effective surface area of the catalyst material. On the other hand, the activity of a catalyst material is greater when the particle size thereof is small. However, the present inventors have found that when a catalyst material is too small and thus too active, the particles of the catalyst material would then aggregate with one another, ultimately causing an increase in the particle size of the catalyst material.

As such, a preferred particle size that maximizes the effective surface area of a catalyst material with hardly any aggregation among the catalyst material is defined as being approximately 3 nm.

In addition, it has also been identified by the present inventors that a catalyst material with a particle size of approximately 3 nm is produced when the catalyst material that is attached to the surface of a carrier in the wet process is approximately 30 % by weight or less.

Therefore, by switching from the wet process to the dry process at a stage where the catalyst material in the intermediate has reached approximately 30 % by weight, or a stage therebefore, a carrier on which a catalyst material of a preferred particle size is loaded may be obtained.

In addition, in a preferred embodiment of a method for the production of an electrode catalyst according to the present invention, the above-mentioned second step is based on arc plasma deposition, and loads the catalyst-loaded carrier intermediate with the catalyst material by irradiating the intermediate with arc plasma.

By loading a carrier with a catalyst metal using arc plasma whose peak energy is significantly higher as compared to, for example, conventional sputtering methods, it is possible to produce a carrier on which a catalyst metal is loaded at a high loading density, with an extremely small particle size and, further, with each particle being isolated.

In addition, as one embodiment of a method for the production of an electrode catalyst according to the present invention, the above-mentioned arc plasma deposition is performed using an arc plasma deposition device comprising at least: an arc plasma generation device; and a decompression container which is in communication with the arc plasma generation device and also receives or sets in the interior thereof the catalyst-loaded carrier intermediate, wherein the interior thereof is adjusted to a decompressed atmosphere.

Here, as one embodiment of an arc deposition source forming an arc plasma generation device, there may be employed, for example, a configuration in which a cathode electrode that comprises a deposition material, an insulating bushing that surrounds the outer circumference of the cathode electrode, and a trigger electrode that is provided on the outer circumference of the insulating bushing form one unit body, this unit body is received within a tubular anode electrode, and these are received within a decompression container. Here, the cathode electrode comprising the deposition material may be formed by, for example, fastening a deposition material that is shaped in an elongate and thin form to an electrode holder, and receiving this in a tubular insulating bushing. It is noted that the insulating bushing is formed of, for example, silica (SiO₂) etc.

When a voltage is applied across the anode electrode and the cathode electrode while also applying a voltage to the trigger electrode, a creeping discharge occurs between the trigger electrode and the cathode electrode comprising the deposition material. As a result, an arc discharge is induced between the anode electrode and the deposition material (cathode electrode). Due to this arc discharge, the deposition material vaporizes, and charged particulates that travel towards the anode electrode are ejected. Under the influence of the magnetic field that occurs within the anode electrode, these charged particulates are blasted towards, for example, a deposition target material that is set or received within the decompression container at a position facing the open end of the anode electrode, thus growing the catalyst metal on the surface of the deposition target material.

For example, there is provided a freely rotatable chamber within the decompression container and at a position facing the open end of the anode electrode. By efficiently breaking down the deposition target material to be processed into fine units within this chamber while irradiating the surfaces of the fine units of the deposition target material (catalyst-loaded carrier intermediate) with arc plasma, the catalyst metal is loaded. By pulverizing the deposition target material into fine units in performing plasma irradiation, the problem of catalyst metal being formed only on parts of the aggregate due to aggregation of the deposition target material is prevented from occurring, and it is possible to load the catalyst metal evenly on the surfaces of fine deposition target material while increasing the effective surface area of the catalyst metal.

As mentioned above, platinum is relatively expensive. However, according to a production method of the present invention in which a wet process and a dry process are used in combination and in which an arc plasma deposition method is employed in the dry process, it is made possible to increase the effective surface area per unit weight of platinum or of an alloy thereof, as a result of which it is possible to reduce the amount of platinum used relative to a given power generating capacity. A method for the production of an electrode catalyst according to the present invention is suited for the production of the electrode catalyst layers of fuel cells for electric vehicles which have recently seen their development advance by the day and whose production is beginning to expand. However, it goes without saying that, besides the above, it is also applicable to the production of other catalyst layers such as catalysts for diesel engines, etc.

### Effects of the Invention

As can be understood from the description above, according to a method for the production of an electrode catalyst of the present invention, by using a wet process and a dry process in combination, the effective surface area of a catalyst metal can be increased and, further, it is possible to realize high-loading of the catalyst metal.

### BRIEF DESCRIPTION OF DRAWINGS

Figure 1(a) is a view illustrating a first step (wet process) of a method for the production of an electrode catalyst of the present invention, and (b) is a schematic view showing an intermediate particle of an electrode catalyst produced in the first step.
Figure 2 is a view showing an arc plasma deposition device to be used in a second step (dry process) of a method for the production of an electrode catalyst of the present invention.
Figure 3 is a vertical sectional view in which a deposition source that forms part of the arc plasma deposition device in Figure 2 is shown enlarged.
Figure 4 is a schematic view showing an intermediate particle that is produced in the first step and a catalyst-loaded carrier particle that is subsequently produced in the second step.
Figure 5 is a graph showing experiment results comparing the effective platinum surface areas of both a case where platinum-cobalt is loaded on the surfaces of carbon particles through a dry process alone (comparative example) and a case where platinum-cobalt is loaded by a production method of the present invention (working example).
Figure 6 is a graph showing experiment results relating to the loaded amount and particle size of a catalyst metal by a wet process.
Figure 7 is a graph showing experiment results relating to the particle size of a catalyst metal and effective platinum surface area.
Figure 8(a) is a TEM image of carbon particles on which platinum is loaded in a case based on a dry process alone, and (b) is a TEM image of carbon particles on which platinum is loaded in a case based on a production method of the present invention.

### Description of Symbols

1... cathode electrode; 2... trigger electrode; 3... C-ring; 4... insulating bushing; 5... electrode holder; 6... anode electrode; 7... bolt; 8... decompression container; 10... arc deposition source; 20... power source; 30... chamber; 40... servo motor; 50... vacuum pump; 60... rotary pump; 70... tank; 71... stirring rod; 100... arc plasma deposition device; C... carbon carrier particle; T1... intermediate particle; T2... catalyst-loaded carrier particle; S1, S2... catalyst metal particle (platinum particle); S1'... catalyst material precursor.

### BEST MODE FOR CARRYING OUT THE INVENTION

An embodiment of the present invention will be described below with reference to the drawings. It is noted that although in the working example of a production method of the present invention shown in the drawings, an arc plasma deposition method is employed for the dry process, other physical vapor deposition methods (sputtering method, hollow cathode method, etc.) may also be employed.

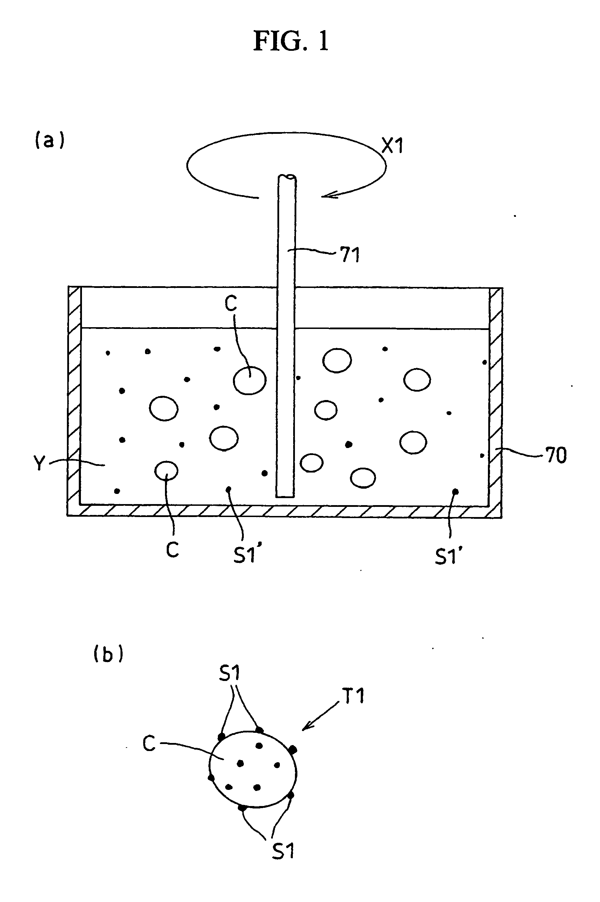

Figure 1a is a view illustrating a first step (wet process) of a method for the production of an electrode catalyst of the present invention, and Figure 1b is a schematic view showing an intermediate particle of an electrode catalyst produced in the first step.

First, in the wet process, carbon particles C, which are carriers, and a catalyst material precursor S1' are fed into a solvent Y, such as distilled water, alcohol, etc., that is stored in a tank 70 that is provided, and a catalyst-dispersed slurry is produced by stirring (X1 direction) with a stirring rod 71.

Here, chloroplatinic acid, hexachloroplatinic acid, etc., may be used for the catalyst material precursor S1'.

As stirring is continued, while feeding the catalyst material precursor S1', and the solvent Y evaporated, an intermediate particle T1 of a catalyst material, wherein catalyst metal particles S 1 comprising platinum are loaded on the surface of a carbon particle C as shown in Figure 1b, is produced.

Here, the cue for transitioning from this wet process to a dry process, that is, the average particle size of the catalyst metal particles S 1 that form the intermediate particle T1 is approximately 3 nm (nanometers), and the weight percentage of the catalyst metal particles satisfying this condition is approximately 30 % by weight or therebelow.

Subsequently, a transition is made to a second process in which catalyst metal particles are further loaded on the surface of the thus produced intermediate particles T1 of the catalyst material through a dry process.

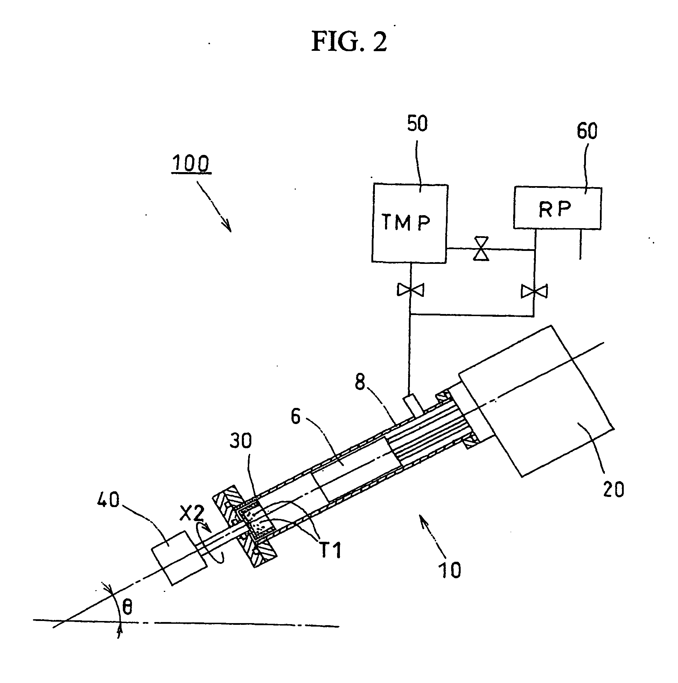

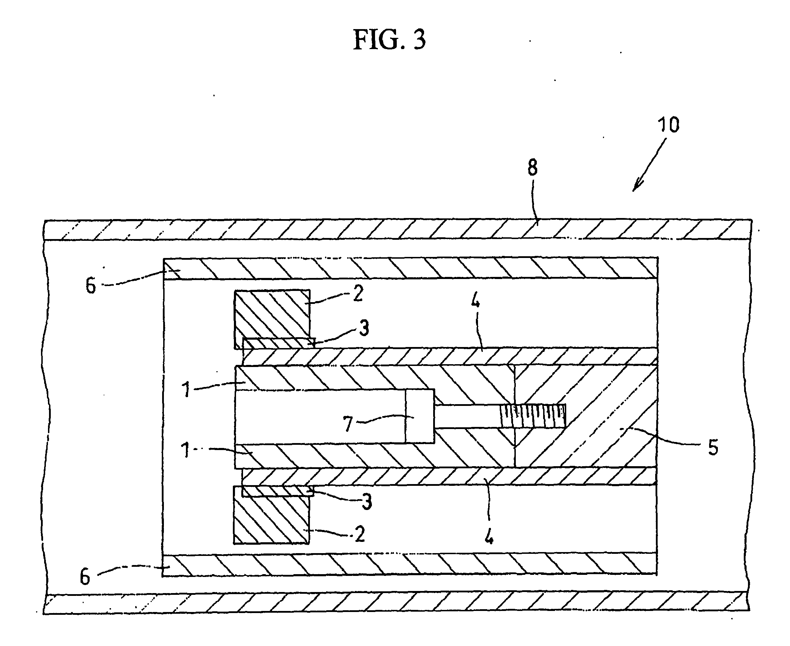

An arc plasma deposition device to be used in the dry process will now be described based on Figures 2 and 3.

Figure 2 is a view schematically illustrating an arc plasma deposition device that is used in the second process, that is, the dry process, of a production method of the present invention. This arc plasma deposition device 100 generally comprises: a power source 20 and an arc deposition source 10 that form an arc plasma generation device; a decompression container 8 that is attached to this arc plasma generation device and that holds therewithin the arc deposition source 10; and, at the tip thereof, a chamber 30 that receives the intermediate particles T1. The arc plasma deposition device 100 is aligned and fixed in such an attitude where the longitudinal direction (plasma radiation direction) of the decompression container 8 is inclined by θ relative to a horizontal plane. This chamber 30 is further configured freely rotatable (X2 direction) at a predetermined speed by means of a servo motor 40 (e.g., AXU425 manufactured by Oriental Motor Co., Ltd.) at the tip. In addition, the arc plasma deposition device 100 is in communication with a vacuum pump 50 (e.g., a turbomolecular pump such as YTP-150 manufactured by ULVAC, Inc.) and a rotary pump 60 for vacuum assistance, and, with the above, turns the interior of the decompression container 8 into a decompressed atmosphere (or a vacuum atmosphere in some cases), and causes discharge. It is noted that the above-mentioned angle θ direction is in alignment with the axis of rotation of the chamber as well, and the range for this θ should preferably be set within the range of 30 to 60 degrees from the perspective of facilitating the falling off of the carbon carriers from the chamber interior wall, and so forth.

In addition, the arc plasma deposition device 100 is connected to a personal computer not shown in the drawings, and within this computer, the configuration is such that pulsed radiation of plasma can be executed while transmitting a pulse signal to the arc plasma deposition device 100. In addition, the rotation speed of the servo motor 40 is also controllable at the computer, and both the rotation speed and pulse signal transmission timing are thus adjusted.

For example, as conditions for causing further dry loading of the platinum catalyst on the intermediate particles T1, production of the electrode catalyst may be conducted under the following: a degree of vacuum within the decompression container 8 of 1.0 x 10⁻⁴ Pa; a trigger voltage of 200 V; room temperature; arc plasma radiation being pulsed; a radiation interval thereof of 4 pulses/second; and a revolution rate of 45 rpm for the servo motor 40.

According to the above-mentioned arc plasma deposition device 100 of the present invention, the intermediate particles T1 are caused to fall off from time to time due to the rotation of the chamber 30 to prevent aggregation thereof, and arc plasma is radiated thereon. Consequently, it is possible to produce fine units of catalyst-loaded carrier particles, wherein a uniform platinum catalyst is loaded on the surfaces of the carbon carriers.

In addition, a further detailed configuration of the arc deposition source 10 forming the arc plasma deposition device 100 is shown in Figure 3.

The arc deposition source 10 is formed in such a manner that one unit body is formed of: a cathode electrode 1, which is formed of platinum as a deposition material and comprises a recessed groove in the interior thereof; an electrode holder 5 that is connected to the cathode electrode 1 via a bolt 7 that is inserted into the recessed groove of the cathode electrode 1; a tubular insulating bushing 4 that surrounds the outer circumferences of the cathode electrode 1 and the electrode holder 5; a C-ring 3 provided on the outer circumference of the insulating bushing 4; and a tubular trigger electrode 2 provided on the outer circumference thereof, wherein this unit body is received within a tubular anode electrode 6, and the above are received within the tubular decompression container 8.

One end of the cathode electrode 1 protrudes from an end portion of the insulating bushing 4 by, for example, approximately 1 mm, and a creeping discharge occurs between the side surface of this protruding cathode electrode and one end of the trigger electrode 2.

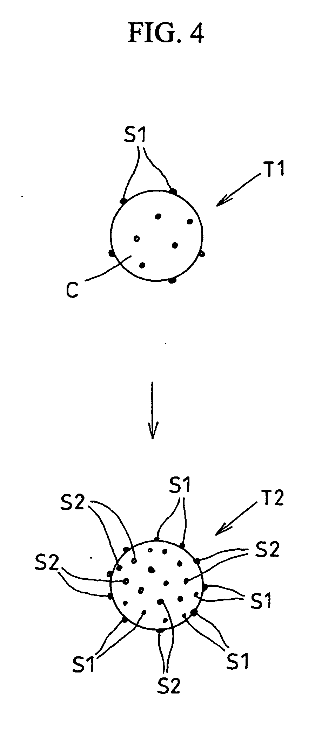

As shown in Figure 4, through the above-mentioned first step (wet process), the platinum particles S1, preferably with an average particle size of approximately 3 nm, are loaded on the surfaces of the carbon particles C to produce the intermediate particles T1. Subsequently, through the second step (dry process), extra platinum particles S2 are loaded at different sites on the surfaces of the carbon particles C to produce catalyst-loaded carrier particles T2. The catalyst-loaded carrier particles T2 on which the catalyst metal is loaded are such carrier particles that are in a dispersed form without any aggregation among the catalyst metal due to the fact that loading sites for the catalyst metal on the carbon particles C differ between the wet process and the dry process, and that are, further, of a high loading density of 30 % or greater by weight.

[Experiment comparing the effective platinum surface areas of both a case where platinum-cobalt was loaded on the surfaces of carbon particles through a dry process alone (comparative example) and a case where platinum-cobalt was loaded through a production method of the present invention (working example), and results thereof]
The present inventors tried an experiment comparing the effective platinum surface areas of both a case where 40 % by weight of platinum-cobalt particles were loaded on the surfaces of carbon particles through an arc plasma deposition method alone (dry process alone) (comparative example), and a case where 40 % by weight of platinum-cobalt particles were loaded on the surfaces of carbon particles by employing a production method of the present invention, that is, by employing arc plasma deposition (dry process) after a wet process (working example).

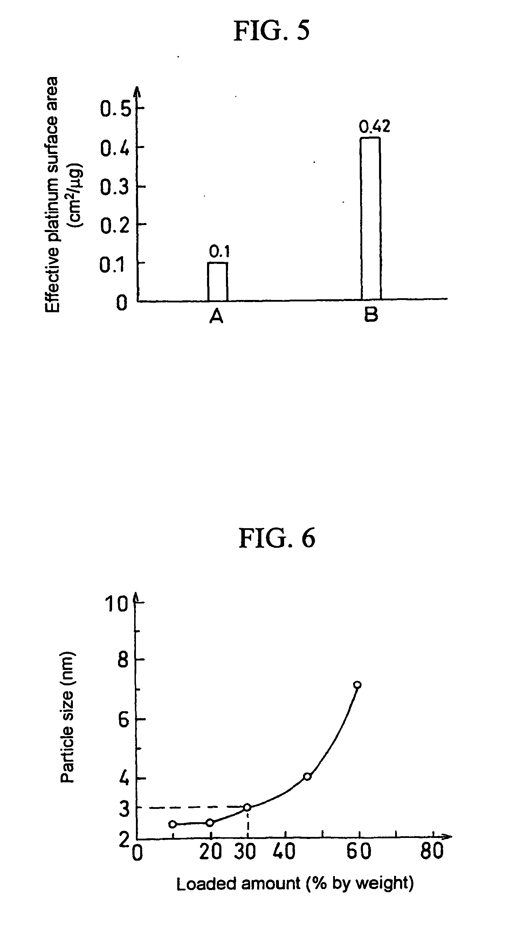

Experiment results are shown in Figure 5, where graph A represents the comparative example and graph B the working example.

From the diagram, whereas the effective platinum surface area in the comparative example was approximately 0.1 ²/µg, the effective platinum surface area in the working example was approximately 0.42 cm²/µg, demonstrating that the effective surface area of platinum improved four-fold or more relative to the comparative example.

This thus signifies that, relative to a case where the electrode catalyst layer is produced through a dry process alone, much less a case based on a wet process alone, by producing an electrode catalyst layer through a wet process and a dry process in combination, it is possible to obtain a fuel cell having a comparable power generating capacity but with, for example, approximately 1/4 the amount of platinum used in a case based on conventional methods.

[An experiment relating to the loaded amount and particle size of a catalyst metal through a wet process, an experiment relating to the particle size and effective platinum surface area of a catalyst metal, and results thereof]
In further identifying an optimal cue for switching from the wet process to the dry process, the present inventors measured the loaded amount of a catalyst metal in the wet process and the average particle size corresponding thereto, and further measured the effective platinum surface areas for the respective average particle sizes.

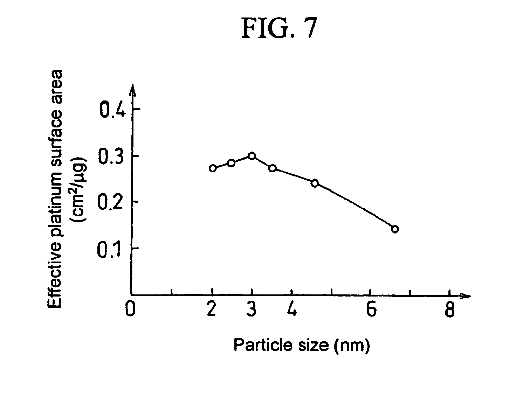

Figure 6 shows in a graph the relationship between the amount of platinum loaded and the average particle size of platinum corresponding thereto, and Figure 7 shows in a graph the relationship between the average particle size of platinum and the effective platinum surface area corresponding thereto.

From Figure 6, it can be seen that as the amount of platinum loaded increases, the average particle size of platinum increases. This shows that as a result of platinum being loaded in concentration at sites where platinum is readily loaded on the surfaces of carbon particles in the wet process, aggregation of platinum occurs at the loading sites, thereby leading to an increase in average particle size.

On the other hand, from Figure 7, with respect to the average particle size of platinum and the effective surface area thereof, it was found that the greatest effective surface area was attained at an average particle size of approximately 3 nm.

These results apply to both the wet process and the dry process. As the average particle size exceeds the above, the effective surface area decreases due to aggregation among particles. As the average particle size falls below the above, the activity of the platinum particles increases, as a result of which aggregation among the particles is brought about.

In addition, from Figures 6 and 7, based on the fact that the amount of platinum loaded at which the average particle size of platinum becomes approximately 3 nm in the wet process is approximately 30 % by weight, as a cue for switching from the wet process to the dry process, it was found that a transition to the dry process should preferably be made at a point when the loaded amount of platinum or of a platinum alloy is 30 % or less by weight.

In addition, the present inventors have come to discover that, through the above-mentioned production method of the present invention, it is possible to produce a catalyst-loaded carrier with an extremely high loading density, where the loaded amount of the catalyst metal is 45 % or greater by weight. This high loading density carrier of 45 % or greater by weight is a loaded amount that, with respect to an electrode catalyst layer forming a fuel cell, satisfies the absolute metal amount required to meet the requisite performance for the fuel cell and, further, that is capable of contributing to the formation of a thin electrode catalyst layer that is low in resistance and superior in gas diffusivity.

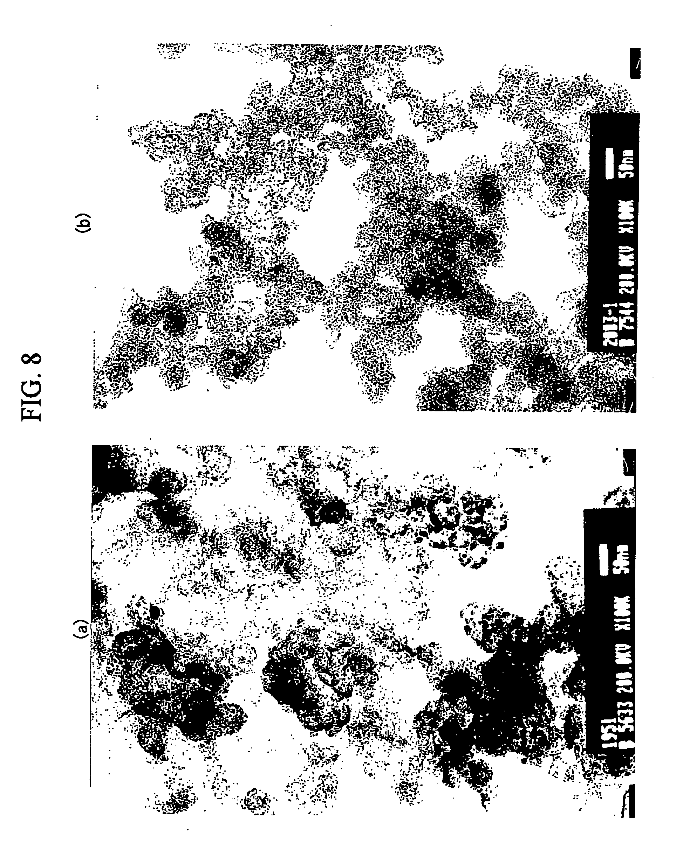

Figure 8 shows TEM images of platinum particles loaded on the surfaces of carbon particles, where, more specifically, Figure 8a is a TEM image of carbon particles on which platinum is loaded in a case based on a dry process alone, and Figure 8b is a TEM image of carbon particles on which platinum is loaded in a case based on a production method of the present invention. In the images, the large sites in black are sites where the platinum particle size has become large due to aggregation.

From the images, it can be visibly confirmed that in the case based on a dry process alone, there are relatively more aggregation sites of platinum, and dispersion of platinum with fine particle sizes is also poor.

On the other hand, in the case of a production method of the present invention that uses a wet process and a dry process in combination, it can be visibly confirmed that dispersion of platinum with fine particle sizes is favorable, that there are few aggregation sites thereof as well, and that the particle size of the aggregation sites is smaller relative to the particle size of the aggregation sites in the case based on a dry process alone.

From the experiments above, by loading a catalyst metal on the surface of a carrier by a wet process and further loading the catalyst metal by a dry process, it is possible to make the effective surface area of the catalyst metal as large as possible and, further, it is possible to produce a catalyst-loaded carrier of a high loading density in which the catalyst metal is well dispersed. By adopting a fuel cell that uses for the electrode catalyst layer this platinum catalyst, etc., of a high loading density and large effective surface area, it is possible to produce a fuel cell with a favorable power generating capacity, or a fuel cell that is considerably cheaper for a given power generating capacity.

## Claims

1. A method for the production of an electrode catalyst, comprising:
a first step of producing a catalyst-loaded carrier intermediate (T1) by dispersing and mixing a carrier (C) and a catalyst material (S1) or a catalyst material precursor (S1') in a solvent (Y) and subsequently removing the solvent (Y), wherein the catalyst material (S1) is attached to a surface of the carrier (C); and
a second step of producing a catalyst-loaded carrier (T2) by further attaching the catalyst material (S2) to a surface of the intermediate (T1) under dry conditions where no solvent (Y) exists.

2. The method for the production of an electrode catalyst according to claim 1, wherein, with respect to the catalyst-loaded carrier intermediate produced in the first step, the particle size of the catalyst material attached to the surface of the carrier is 3 nm (nanometers).

3. The method for the production of an electrode catalyst according to claim 1 or 2, wherein, with respect to the catalyst-loaded carrier intermediate produced in the first step, the catalyst material attached to the surface of the carrier is 30 % or less by weight.

4. The method for the production of an electrode catalyst according to any one of claims 1 to 3, wherein the second step is based on arc plasma deposition, and the catalyst material is loaded on the catalyst-loaded carrier intermediate by irradiating the intermediate with arc plasma.

5. The method for the production of an electrode catalyst according to claim 4, wherein the arc plasma deposition is performed using an arc plasma deposition device (100) comprising at least:
an arc plasma generation device(10, 20); and
a decompression container (8) that is in communication with the arc plasma generation device, that receives or sets in the interior thereof the catalyst-loaded carrier intermediate, and that has the interior thereof adjusted to a decompressed atmosphere.

6. The method for the production of an electrode catalyst according to any one of claims 1 to 5, wherein a catalyst metal within the catalyst material or catalyst material precursor comprises platinum or an alloy thereof, and wherein the carrier comprises a carbon carrier.

## Patentansprüche

1. Verfahren zum Herstellen eines Elektrodenkatalysators, aufweisend:
einen ersten Schritt zum Herstellen eines mit einem Katalysator beladenen Trägerzwischenprodukts (T1) durch Dispergieren und Vermischen eines Trägers (C) und eines Katalysatormaterials (S1) oder einer Katalysatormaterialvorstufe (S1') in einer Lösung (Y) und anschließendes Entfernen der Lösung (Y), wobei das Katalysatormaterial (S1) an der Oberfläche des Trägers (C) anhaftet; und
einen zweiten Schritt zum Ausbilden eines Katalysator-beladenen Trägers (T2) durch weiteres Anhaften des Katalysatormaterials (S2) an der Oberfläche des Zwischenprodukts (T1) unter trockenen Bedingungen, in denen keine Lösung (Y) vorliegt.

2. Verfahren zum Herstellen eines Elektrodenkatalysators nach Anspruch 1, wobei, bezüglich des im ersten Schritt hergestellten mit einem Katalysator beladenen Trägerzwischenprodukts, die Partikelgröße des Katalysatormaterials, das an der Oberfläche des Trägers anhaftet, 3nm (Nanometer) ist.

3. Verfahren zum Herstellen eines Elektrodenkatalysators nach Anspruch 1 oder 2, wobei, bezüglich des im ersten Schritt hergestellten mit einem Katalysator beladenen Trägerzwischenprodukts, das an der Oberfläche des Trägers anhaftende Katalysatormaterial 30 Gew% oder weniger ausmacht.

4. Verfahren zum Herstellen eines Elektrodenkatalysators nach einem der Ansprüche 1 bis 3, wobei der zweite Schritt auf einer Lichtbogenplasma-Ablagerung basiert und das Katalysatormaterial durch Bestrahlen des Zwischenprodukts mit dem Lichtbogenplasma auf das mit dem Katalysator beladene Trägerzwischenprodukt aufgebracht wird.

5. Verfahren zum Herstellen eines Elektrodenkatalysators nach Anspruch 4, wobei die Lichtbogenplasma-Ablagerung unter Verwendung einer Lichtbogenplasma-Ablagerungsvorrichtung (100) ausgeführt wird, die zumindest aufweist:
eine Lichtbogenplasma-Erzeugungsvorrichtung (10, 20); und
einen Dekompressionscontainer (8), der mit der Lichtbogenplasma-Erzeugungsvorrichtung in Verbindung steht, und der in seinem Inneren das mit dem Katalysator beladene Trägerzwischenprodukt aufnimmt oder einstellt, und dessen Inneres auf eine dekomprimierte Atmosphäre eingestellt wird.

6. Verfahren zum Herstellen eines Elektrodenkatalysators nach einem der Ansprüche 1 bis 5, wobei ein Katalysatormetall im Katalysatormaterial oder der Katalysatormaterialvorstufe Platin oder eine Legierung hiervon aufweist, und wobei der Träger einen Kohlenstoffträger aufweist.

## Revendications

1. Procédé de production d'un catalyseur d'électrode, comprenant :
une première étape consistant à produire un intermédiaire porteur chargé de catalyseur (T1) en dispersant et mélangeant un porteur (C) et une matière de catalyseur (S1) ou un précurseur de matière de catalyseur (S1') dans un solvant (Y) et en éliminant par la suite le solvant (Y), la matière de catalyseur (S1) étant fixée à la surface du porteur (C) ; et
une seconde étape consistant à produire un porteur chargé de catalyseur (T2) en fixant en outre la matière de catalyseur (S2) à la surface de l'intermédiaire (T1) à l'état à sec où il n'y a pas de solvant (Y).

2. Procédé de production d'un catalyseur d'électrode selon la revendication 1, dans lequel, en ce qui concerne l'intermédiaire porteur chargé de catalyseur produit à la première étape, la taille de particule de la matière de catalyseur fixée à la surface du porteur est de 3 nm (nanomètres).

3. Procédé de production d'un catalyseur d'électrode selon la revendication 1 ou 2, dans lequel, en ce qui concerne l'intermédiaire porteur chargé de catalyseur produit à la première étape, la matière de catalyseur fixée à la surface du porteur est de 30 % ou moins en poids.

4. Procédé de production d'un catalyseur d'électrode selon l'une quelconque des revendications 1 à 3, dans lequel la seconde étape est basée sur un dépôt de plasma à l'arc, et dans lequel la matière de catalyseur est chargée sur l'intermédiaire porteur chargé de catalyseur par projection sur l'intermédiaire de plasma à l'arc.

5. Procédé de production d'un catalyseur d'électrode selon la revendication 4, dans lequel le dépôt de plasma à l'arc se fait en utilisant un dispositif de dépôt de plasma à l'arc (100) comprenant au moins :
un dispositif générateur de plasma à l'arc (10, 20) ; et
un conteneur de décompression (8) qui est en communication avec le dispositif générateur de plasma à l'arc, qui reçoit ou place en son sein l'intermédiaire porteur chargé de catalyseur, et dont l'intérieur est réglé à une atmosphère décomprimée.

6. Procédé de production d'un catalyseur d'électrode selon l'une quelconque des revendications 1 à 5, dans lequel un métal catalyseur à l'intérieur de la matière de catalyseur ou du précurseur de matière de catalyseur comprend du platine ou un de ses alliages, et dans lequel le porteur comprend un porteur à base de carbone.
